# FASCICULE DE BREVET EUROPEEN

(11) **EP 1 168 810 B1**
(45) Date de publication et mention de la délivrance du brevet: **21.01.2004**
(21) Numéro de dépôt: 01401451.8
(22) Date de dépôt: 05.06.2001
(51) Int. Cl.: H04N 1/00, G03B 29/00, G07C 9/00

(54) **Téléphone mobile muni d'une caméra**
Mobiltelefon versehen mit einer Kamera
Mobile telephone equipped with a camera

(30) Priorité: 09.06.2000 FR 0007465; 31.08.2000 FR 0011249
(43) Date de publication de la demande: 02.01.2002
(73) Titulaire: SAGEM S.A., 75015 Paris (FR)
(72) Inventeur: Labaume, Christophe, 93700 Drancy (FR)
(74) Mandataire: Schmit, Christian Norbert Marie

(56) Documents cités:
- EP-A- 0 833 494
- EP-A- 0 930 770
- EP-A- 0 963 100
- WO-A-00/31679
- WO-A-00/65871
- WO-A-01/30068
- WO-A-99/24938
- DE-U- 9 304 488

## Description

L'invention a pour objet un téléphone mobile muni d'une caméra. Le domaine d'application est la téléphonie mobile, comprise autant en communication de paroles qu'en communication de données. Le but de l'invention est d'augmenter les capacités fonctionnelles des téléphones mobiles.

Dans le domaine de la téléphonie fixe, il est possible d'envoyer des télécopies grâce à un dispositif connu, dit télécopieur ou fax, utilisant les principes de la téléphonie et de la numérisation d'image. Un tel télécopieur permet la transmission de documents graphiques en fac-similé. Ces documents en fac-similé, tout en n'acquérant pas le statut de preuve légale, au contraire des télex, forment cependant des commencements de preuves par écrit, hautement utiles, notamment dans le cadre des affaires commerciales. Dans le domaine de la téléphonie mobile, il est connu de relier un téléphone mobile à un télécopieur, par un câble de fond de boîtier notamment, pour se servir du téléphone mobile comme transmetteur. Avec un tel équipement, un télécopieur peut par exemple être utilisé dans un véhicule. Mais de tels télécopieurs présentent cependant toujours un inconvénient d'encombrement spatial lié au dispositif de capture d'image.

Par ailleurs des envois de télécopies sont aussi souhaitables lors de vidéoconférences. En effet, la vidéoconférence est une conférence pour laquelle au moins deux interlocuteurs ou plus, situés dans deux lieux différents ou plus, sont reliés entre eux par des circuits de télécommunication. Il est possible de transmettre de la parole et des images animées des participants à une telle vidéoconférence. Pour la mener à bien, outre des micro-ordinateurs, il est envisageable d'utiliser des visiophones. Un visiophone est un téléphone à images, doté d'une caméra et d'un écran. Il permet non seulement d'entendre un correspondant mais aussi de le voir.

Les inconvénients de la vidéoconférence et de la visioconférence sont les suivants : les utilisateurs doivent disposer de logiciels de vidéoconférence compatibles entre eux. Les appareils utilisés ne sont pas ou peu mobiles. Ils sont peu maniables et ne permettent notamment pas un usage simple de la télécopie.

Des utilisateurs disposant d'un ordinateur multimédia, muni de haut-parleurs, d'un microphone, d'une caméra, de circuits pour se connecter au réseau Internet, et d'un logiciel adéquat pour les utiliser, pourraient néanmoins faire facilement de la vidéoconférence. Un cours pourrait être donné par exemple par un professeur à des élèves habitant dans des régions peu peuplées. Mais ces utilisateurs ne peuvent cependant pas envoyer ou recevoir de télécopies sans appareil dédié à cet usage.

Des utilisateurs utilisant des techniques multimédia ont aussi la possibilité de faire leurs courses, de choisir en direct leurs achats, et ou de demander des conseils en étant devant leur écran d'ordinateur. Ils sont juste connectés sur un site Internet d'une entreprise qui est leur interlocuteur. Dans ce but certaines entreprises ont formé des personnes afin qu'elles puissent répondre aux besoins de ces clients. Ces personnes, chaussées par exemple de patins à roulettes et transportant un micro-ordinateur portable muni des circuits adéquats pour faire de la vidéoconférence, sont connectées en permanence sur le site de l'entreprise, et peuvent dialoguer en direct avec un client. Lorsque le client veut acheter un objet déterminé d'une marque précise, le vendeur se dirige vers le bon rayon et montre au client par l'intermédiaire de la caméra l'objet désiré. Le client peut ainsi être sûr de l'achat qu'il va effectuer tout en restant chez lui. Il serait souhaitable cependant de pouvoir envoyer une télécopie d'une fiche signalétique de l'objet choisi, pour notamment constituer une preuve de la nature de la transaction projetée.

Des dispositifs encombrants sont donc actuellement nécessaires pour envoyer des télécopies, dans le cadre de la vidéoconférence ou non. Dans l'invention, le dispositif utilisé pour envoyer des télécopies, et qui peut être le même que celui utilisé pour la vidéoconférence ou la visioconférence, est un téléphone mobile muni de ses circuits connus, avec notamment une caméra, et de circuits supplémentaires. Ces circuits supplémentaires servent à transformer une image saisie avec la caméra du téléphone mobile en un fichier de télécopie. Une transmission de documents graphiques par télécopie devient alors possible.

Il est ainsi possible d'envoyer des télécopies de manière plus pratique et de vérifier en même temps ce qu'on envoie, car l'image envoyée peut être visualisée sur l'écran du téléphone mobile, et ou du micro-ordinateur auquel ce téléphone mobile est relié. La notion de portabilité du téléphone mobile permet alors une simplification des envois de télécopies.

Par ailleurs il serait souhaitable de pouvoir vérifier qu'un utilisateur d'un téléphone mobile est en règle vis à vis de son opérateur de téléphonie mobile, ou vis à vis de n'importe quel interlocuteur qu'il peut joindre avec ce téléphone mobile. On connaît à cet effet les codes PIN (Personnal Identification Number - numéro d'identification personnel) servant de code secret et réservant l'utilisation du téléphone au seul titulaire de ce code PIN. Cependant, il arrive qu'un utilisateur se fasse dérober son téléphone mobile et soit même contraint par la force à divulguer son code PIN à son voleur. Une telle protection ne protège donc pas dans tous les cas.

Dans l'invention, un système de reconnaissance d'éléments biométriques est incorporé au téléphone mobile. Il permet de sécuriser l'utilisation du téléphone mobile. Le document WO-A-00 31679 enseigne la mise en oeuvre d'un dispositif spécifique pour assurer la sécurité par voies biométriques. La reconnaissance d'éléments biométriques par un téléphone mobile permet aussi d'augmenter, par exemple, la sécurisation des paiements par carte bancaire. Des circuits logiques (code secret) et des circuits physiques (éléments biométriques) de reconnaissance sont mis, dans ce cas, à disposition pour optimiser la sécurisation des paiements par l'intermédiaire d'un téléphone mobile. Dans l'invention, la caméra du téléphone mobile sert à prélever cette image de ces éléments biométriques.

L'invention concerne donc un téléphone mobile comportant une caméra de visiophonie tel que défini en revendication 1.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: un téléphone mobile conforme à l'invention dont la caméra vise un document à étudier ;
- Figures 2a à 2c: des représentations schématiques d'un téléphone mobile selon l'invention ;
- Figure 3 une représentation schématique du contenu d'un téléphone mobile selon l'invention ;
- Figure 4: une représentation d'une méthode de grandissement avec une table de luminance comportant des matrices de pixels, adressables par un signal de luminance.

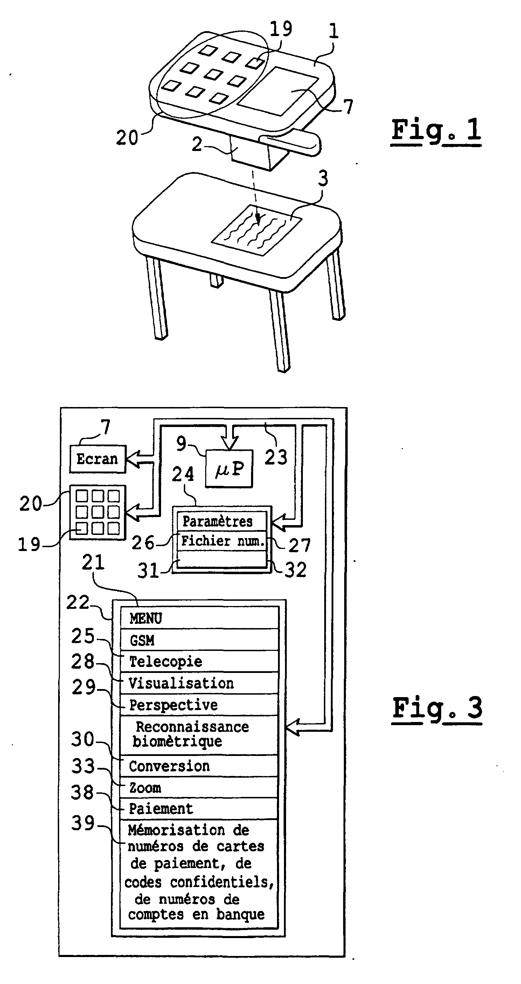

La figure 1 montre un téléphone mobile 1 conforme à l'invention. Il comporte une caméra 2. La caméra 2 vise un document 3. La caméra 2 peut comporter, par exemple, un capteur couleur à 640 X 480 pixels et à 256 couleurs. Pour capturer une image du document à étudier la caméra peut disposer d'un objectif comportant un ensemble dioptrique avec deux focales.

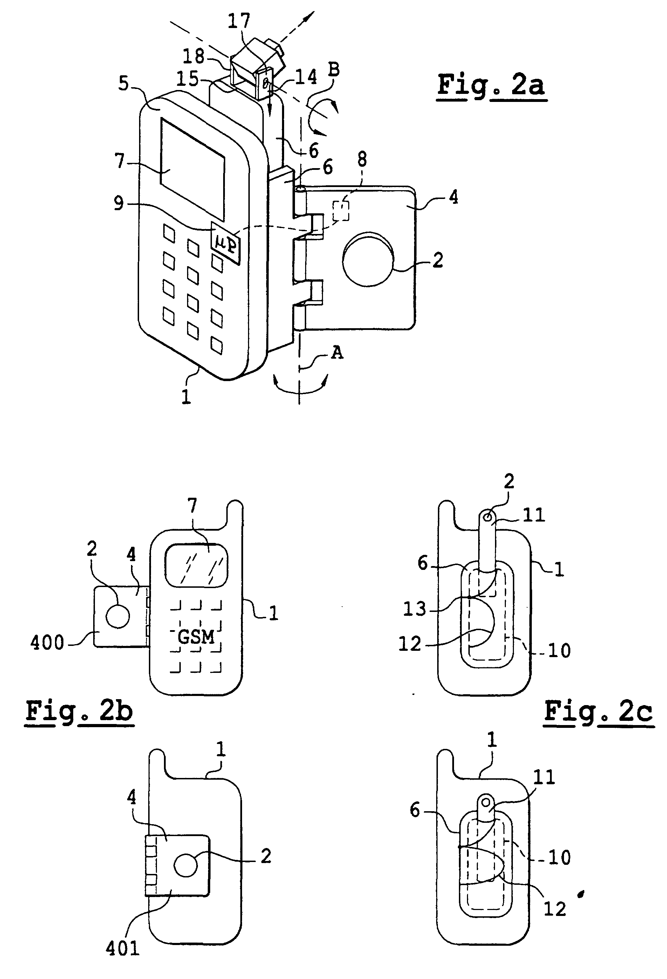

Les figures 2a, 2b, et 2c montrent des réalisations différentes pour la caméra 2. Trois solutions sont notamment envisageables. Une première solution, figure 2a, propose d'installer la caméra 2 sur un volet rabattable 4. Le volet 4 est ancré sur un boîtier 5 du téléphone 1 ou sur un boîtier amovible 6 d'une batterie du téléphone 1. La figure 2a représente une telle solution en trois dimensions.

La figure 2b montre la solution du volet rabattable 4 dans deux positions 400 et 401 possibles pour la caméra 2. Dans le cas de la position 400, l'objectif de la caméra 2 est orienté du même côté qu'un écran 7 du téléphone mobile 1. La position 401 correspond au cas où le volet pivotant est rabattu de l'autre côté du téléphone mobile. Ainsi l'objectif de la caméra 2 est dirigé, pour la position 401, depuis le côté du boîtier du téléphone ou il n'y à pas l'écran 7. La position 401 est une position préférée pour l'envoi de télécopie : l'utilisateur peut voir sur l'écran 7 la même image que celle saisie par la caméra 2. Pour savoir dans quelle position se trouve le volet pivotant 4, une cellule photoélectrique 8 peut être placée du côté du volet pivotant 4 où il n'y a pas l'objectif. Cette cellule photoélectrique 8 est reliée à un microprocesseur 9 du téléphone 1 gérant le fonctionnement général de ce téléphone 1. Suivant l'éclairement que reçoit cette cellule photoélectrique 8, le microprocesseur 9 disposera d'une information révélant l'orientation du volet. En effet si la cellule 8 reçoit de la lumière, le volet 4 est dans la position 400. Et dans le cas contraire le volet 4 est dans la position 401.

Le volet 4 peut pivoter autour d'un axe A parallèle à un côté du boîtier 6 de la batterie. La rotation du volet 4 autour de l'axe A est permise grâce à des charnières fixées le long d'un côté du boîtier 6. La forme géométrique du volet 4 peut être rectangulaire mais pas uniquement. Des formes circulaires ou encore ovales pourraient être aussi envisagées.

La figure 2c présente une deuxième solution avec un périscope. Un logement 10 pour un périscope 11 est réalisé, par exemple, dans le boîtier de la batterie 6. La caméra 2 est installée en tête du périscope 11. L'objectif de la caméra se trouve sur une face de la tige du périscope 11. Ainsi le périscope 11 peut s'emboîter dans le boîtier 6.

Lorsque le périscope 11 se déplace, il peut avoir une trajectoire 12 hélicoïdale. Et la position courante du périscope 11 détermine l'orientation de l'objectif de la caméra, à savoir respectivement celle correspondant à la position 401 (périscope en position basse) ou à la position 400 (périscope en position haute). La position courante du périscope 11 est déterminée par exemple par l'état d'un interrupteur 13. L'interrupteur 13 peut être remplacé par un bouton de commande. Un état fermé ou ouvert de l'interrupteur 13 est interprété par le microprocesseur 9 : la position haute du périscope 11 correspond par exemple à un état fermé de l'interrupteur 13 et à une position de vidéoconférence ou à une position de prise de données biométriques de l'utilisateur : son iris par exemple. Un état ouvert de l'interrupteur 13, position basse du périscope 11, correspond à des envois de télécopies ou à des reconnaissances d'empreintes digitales.

Cependant, ces solutions ne proposent pas de protection de l'objectif de la caméra 2. L'objectif est toujours à découvert. Pour résoudre ce problème il est possible d'envisager un périscope 14 comme le montre la figure 2a dans lequel un logement 15 est prévu pour accepter la caméra 2. La caméra 2 est alors escamotable. La caméra 2 pivote de préférence autour d'un axe B (perpendiculaire ici à l'axe A) de telle sorte que l'objectif de la caméra puisse être protégé. Soit cet objectif est orienté vers l'intérieur du téléphone mobile, et la caméra est rentrée dans son logement 15. Soit l'objectif est protubérant, et est orienté comme l'écran 7 ou en sens opposé.

L'axe B de rotation de la caméra 2 est fixé par chacune de ses extrémités à des paliers mobiles 17 et 18. Les paliers mobiles 17 et 18 sont portés par des montants parallélépipèdiques glissants ayant un mouvement parallèle au mouvement du périscope 14 dans le logement 15 prévu pour la caméra. Des circuits installés sur la caméra 2 mobile sont reliés au microprocesseur 9 par l'intermédiaire de connecteurs situés par exemple sur les paliers mobiles 17 et 18. Selon que l'objectif est dirigé du même côté que l'écran 7 ou non, une partie ou une autre de ces circuits est en regard des connecteurs. Le microprocesseur 9 peut interpréter ce type de connexion pour en déduire l'orientation de la caméra 2.

L'orientation de la caméra 2 détermine de préférence la nature des opérations qui doivent être effectuées. La nature de l'orientation de la caméra 2 est déterminée par la reconnaissance de la position courante de la caméra 2. Plusieurs cas peuvent ainsi se présenter : la vidéoconférence ou la télécopie, la reconnaissance d'éléments biométriques, voire la lecture de codes barres.

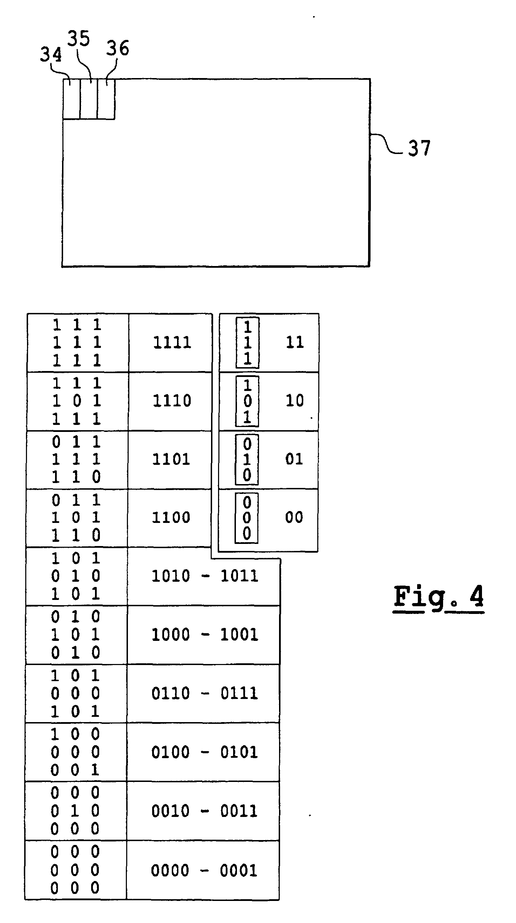

La Figure 3 montre un ensemble de circuits contenus dans le téléphone mobile 1 selon l'invention. Si un utilisateur désire utiliser la caméra 2, il place, selon une réalisation manuelle, la caméra 2 à la position adéquate correspondant à l'opération qu'il veut effectuer, par exemple pour envoyer une télécopie du document 3. La caméra 2 se retrouve alors de préférence dans la position 401.

L'utilisateur précise ensuite comment il choisit d'utiliser la caméra 2, en appuyant par exemple sur un bouton 19 d'un clavier de commande 20 du téléphone 1. Le microprocesseur 9 a repéré et interprété la position courante de la caméra 2. Un programme 21 d'une mémoire programme 22 entraîne alors un affichage sur l'écran 7 d'un menu proposant d'utiliser un mode pour la télécopie, ou un mode pour la reconnaissance d'éléments biométriques ou autres. De préférence ce menu correspond à des fonctions exécutables avec l'orientation retenue de la caméra. Tous les choix effectués par l'utilisateur sont mémorisés par l'intermédiaire d'un bus 23 dans une mémoire de données 24.

L'utilisateur précise, grâce à ce menu 21, dans un premier temps, le mode de télécopie. Un programme 25 de la mémoire programme 22 gère le mode de télécopie. Ce programme 25, une fois qu'il est lancé depuis le menu 21, demande notamment à l'utilisateur de préciser le sens dans lequel l'image doit être mémorisée, par exemple le sens paysage ou le sens portrait. Eventuellement, un traitement préalable d'une première image saisie peut conduire à une détermination automatique du sens portrait ou paysage à retenir. L'utilisateur place à cet effet le document 3 à télécopier devant l'objectif de la caméra 2. Une image du document 3 saisie par la caméra 2 est convertie par la caméra 2 en un fichier numérique 26. Le fichier 26 est mémorisé par l'intermédiaire du bus 23 dans un espace mémoire 27 de la mémoire 24.

L'image est saisie par la caméra avec une résolution de N x M pixels, par exemple 640 x 480, avec par exemple un capteur VGA couleur. Pour chaque image,saisie, on peut en faire apparaître sur l'écran 7 du téléphone 1 une reproduction grossière en couleur. Tant que l'utilisateur estime que l'image saisie qu'il observe sur l'écran 7 n'est pas celle qu'il veut envoyer par télécopie, il modifie la position du téléphone 1, donc de la caméra 2, et une nouvelle image saisie est mémorisée dans le fichier 26 dans l'espace mémoire 27 en lieu et place de l'ancienne. La visualisation de l'image saisie est permise grâce à un programme de visualisation 28 contenu dans la mémoire programme 22.

Un problème de perspective peut apparaître. Un programme 29 de la mémoire programme 22 corrige alors la déformation éventuelle de l'image saisie. Le programme 29 se déroule automatiquement, ou est activé par l'utilisateur grâce à une pression d'une touche du clavier de commande 20.

Le fichier 26 précédemment enregistré est écrasé par un nouveau fichier et l'image précédente est alors perdue dès qu'une nouvelle image est saisie. En mode de saisie, de préférence une durée de cinq secondes sépare chaque saisie, de manière à autoriser une décision d'émission de télécopie. A cet effet, dès que l'image saisie correspond à l'image que l'utilisateur veut envoyer par télécopie, cet utilisateur valide son choix dans un menu du programme 25. L'utilisateur doit ensuite déterminer si l'image capturée et mémorisée dans le fichier 26 doit subir, ou non, une rotation de quatre vingt dix degrés. Cette option est demandée par le programme 25.

L'envoi d'une télécopie d'une image en un format vidéo nécessite d'effectuer une conversion du signal en un format vidéo, représentatif de l'image saisie à envoyer en télécopie, en un signal en un format accepté par un protocole de télécopie. Un sous-programme 30 de la mémoire programme 22 contient un algorithme réalisant cette conversion.

Dans le cas où l'utilisateur aurait choisi de ne pas effectuer de rotation, l'image saisie par le capteur de la caméra selon N x M pixels est mémorisée sur aN x bM cellules mémoires dans un fichier 31 dans un espace mémoire 32. Le fichier 31 contient alors une image modifiée. Dans le cas d'une télécopie, a et b sont de préférence tels que l'image modifiée est mémorisée sur 576x376 cellules mémoires. En effet le format traditionnel d'une télécopie est 1728x1130. A partir d'une image 576x376, on effectue ensuite des opérations simples pour obtenir une image 1728x1130. Le format 576x376 est le tiers du format traditionnel de télécopie. Une opération d'agrandissement est donc nécessaire.

Dans l'invention, on propose, pour l'opération d'agrandissement, d'effectuer une interpolation de l'image modifiée pour obtenir une image interpolée à un format αN x βM. Dans le cas d'une télécopie, avec une finesse standard, α et β sont tels que αN x βM est équivalent à 1728 x 1130. L'algorithme d'interpolation est contenu dans une fonction dite de zoom 33 de la mémoire programme 22. Plusieurs méthodes d'interpolation sont envisageables.

L'interpolation peut, selon une première méthode, être une simple duplication des lignes et des colonnes. Par exemple chaque pixel d'une ligne de l'image modifiée est lu trois fois pour former une ligne de l'image standard de télécopie. Dans cette ligne de l'image de télécopie, chaque pixel est ainsi répété trois fois. Chaque ligne de l'image modifiée est aussi lue trois fois (dans les mêmes conditions) pour former trois lignes de l'image de télécopie. Le format de l'image αN x βM ainsi obtenue est alors un format lisible par un protocole de télécopie. Une deuxième méthode d'interpolation consiste à prendre en compte des corrélations existant entre les différents pixels des lignes et des colonnes de l'image avant interpolation. On obtient finalement le format voulu pour la télécopie. Ces méthodes d'interpolation peuvent cependant présenter certains inconvénients d'encombrement en mémoire et ou de temps de traitement.

En utilisant la première et la deuxième méthode d'interpolation, l'image obtenue peut être une image couleur. Pour transformer l'image couleur obtenue en image noir et blanc, une méthode consiste à fixer un seuil de luminance. Si le pixel a un signal de luminance inférieur au seuil, le pixel est alors noir (état à 1). Dans le cas contraire le pixel devient un pixel blanc (état à zéro).

Une troisième méthode utilisable pour l'opération de grandissement est décrite en relation avec la figure 4. Dans cette méthode, chaque pixel de l'image saisie par le capteur de la caméra, ou de l'image modifiée, représente un macropixel de l'image à envoyer en télécopie. En pratique un pixel de l'image saisie ou modifiée est ainsi transformé en P pixels dans l'image à envoyer. P vaut 9 dans un cas préféré. On multiplie ainsi par trois en hauteur et en largeur la résolution de l'image saisie et ou modifiée.

Quand la caméra est une caméra couleur, l'image contenue dans le fichier 26, ou le fichier 31, représente des pixels caractérisés par un signal de chrominance (à trois composantes, traditionnellement rouge, verte et bleue) et un signal de luminance. Dans le but d'agrandir l'image, on convertit le signal de luminance de la caméra en un signal binaire, de type télécopie, en même temps qu'on réalise le grandissement de l'image. On remplace ainsi chaque pixel de l'image saisie (avec une résolution faible correspondant au capteur de la caméra mais avec une dynamique de luminance élevée) par P pixels de luminance binaire d'une image, avec donc une résolution plus forte, de préférence multipliée par trois en hauteur et en largeur. Un pixel saisi se transforme ainsi dans le cas particulier en 9 pixels à transmettre. Dans ce but on divise la dynamique du signal de luminance de la caméra en P+1 plages (10 dans le cas particulier), de la moins forte luminance à la plus forte. On attribue, pour tous les pixels dont les signaux de luminance appartiennent à une même plage, un même motif de pixels binaires à émettre.

Les P+1 motifs de pixels binaires représentés sur la figure 4 sont par exemple constitués de neuf pixels noir, de huit pixels noirs et un pixel blanc, et ainsi de suite jusqu'au dixième motif où tous les neufs pixels sont blancs. De préférence, dans ces motifs, la répartition des pixels noirs et blancs est réalisée de façon à ce que l'impression d'ensemble de motifs identiques, les uns à coté des autres, conduise à éviter des dessins de lignes ou de colonne. Les pixels noirs sont ainsi répartis avec homogénéité dans le macropixel, en tenant compte qu'un macropixel voisin serait formé du même motif. La division de la dynamique en dix plages peut être réalisé en quantifiant la luminance sur quatre bits (ou plus et en ne retenant que les quatre bits de poids fort) et en répartissant, par exemple non linéairement, les motifs plus sombres à des plages de luminance plus larges que pour des motifs plus clairs. La figure 4 montre ainsi une table où, en correspondance de motifs de pixels, on a fait figurer (à titre d'adresse) des valeurs de luminance impliquant ces motifs.

Pour augmenter la résolution de la caméra en mode de télécopie, on peut aussi utiliser individuellement chacun des détecteurs de couleur de cette caméra comme un détecteur élémentaire. On peut dans ce cas utiliser un signal délivré par le détecteur rouge comme un signal de luminance correspondant au champ vu par ce détecteur rouge, et de même pour les détecteurs vert et bleu. On augmente alors sans difficulté la résolution dans la direction d'alignement des détecteurs élémentaires de couleur de la caméra. La figure 4 montre des détecteurs élémentaires rouge, vert et bleu, 34 à 36, du capteur couleur 37 de la caméra 2. Le triplet des détecteurs élémentaires 34 à 36 correspond à un seul pixel du capteur 37. Le capteur 37 comporte N x M triplets identiques de tels détecteurs élémentaires. Le champ observé par chacun de ces triplets est carré. Le champ vu par les détecteurs élémentaires, alignés ici les uns à cotés des autres dans le sens de la largeur, est donc rectangulaire. L'augmentation de la résolution dans la direction de cet alignement est donc facilité.

Pour l'augmentation dans l'autre direction, on peut quantifier le signal de luminance correspondant à chaque détecteur élémentaire sur deux bits et remplacer le pixel dont la valeur de luminance saisie est quantifiée sur une plus grande dynamique par un motif de trois pixels binaires, alignés selon l'autre direction. La figure 4 montre ainsi quatre motifs de trois pixels binaires chacun correspondant à ces niveaux de luminance quantifiés sur deux bits. Pour la constitution de l'image de télécopie, on remplace tous les macropixels d'une ligne de l'image saisie (ou modifiée) par un ensemble de pixels ainsi répartis sur trois lignes distinctes. Pour l'émission du fichier de télécopie, on lit ensuite ce fichier de télécopie en extrayant tour à tour chacune de ces trois lignes distinctes.

Selon le sens de présentation de l'image face à la caméra, selon le type de capteur utilisé pour celle-ci, et selon un mode normal ou fin demandé, différentes situations peuvent se présenter. On peut ainsi disposer de capteurs avec N x M pixels où N et M valent 352 x 288 (type CIF) ou 640 x 480 (type VGA). On peut également vouloir envoyer la télécopie selon un format normal avec une résolution de 1728 x 1130 pixel, ou avec un format fin avec 1728 x 2260 pixel. On peut vouloir aussi la tourner de 90° pour profiter de la meilleure résolution. Selon les configurations, on obtient le tableau suivant :

| Résolution capteur | CIF | CIF | CIF | CIF | VGA | VGA | VGA | VGA |
|---|---|---|---|---|---|---|---|---|
| Nb colonnes | 352 | 352 | 352 | 352 | 640 | 640 | 640 | 640 |
| Nb lignes | 288 | 288 | 288 | 288 | 480 | 480 | 480 | 480 |
| Nb colonnes equivalent en N/B | 1056 | 1056 | 1056 | 1056 | 1920 | 1920 | 1920 | 1920 |
| Nb lignes équivalent en N/B | 288 | 288 | 288 | 288 | 480 | 480 | 480 | 480 |
| | | | | | | | | |
| Finesse Fax | standard | fin | standard | fin | standard | fin | standard | fin |
| Nb colonnes | 1728,00 | 1728,00 | 1728,00 | 1728,00 | 1728,00 | 1728,00 | 1728,00 | 1728,00 |
| Nb lignes | 1130,00 | 2260,00 | 1130,00 | 2260,00 | 1130,00 | 2260,00 | 1130,00 | 2260,00 |
| Nb colonnes/mm | 8,23 | 8,23 | 8,23 | 8,23 | 8,23 | 8,23 | 8,23 | 8,23 |
| Nb lignes/mm | 3,80 | 7,61 | 3,80 | 7,61 | 3,80 | 7,61 | 3,80 | 7,61 |
| | | | | | | | | |
| Rotation Fax | 0°(1/2 A4) | 0°(1/2 A4) | 90° (A4) | 90° (A4) | 0°(1/2 A4) | 0°(1/2 A4) | 90° (A4) | 90° (A4) |
| | | | | | | | | |
| Rapport capteur/Fax | | | | | | | | |
| colonnes | 4,91 | 4,91 | 3,21 | 6,42 | 2,70 | 2,70 | 1,77 | 3,53 |
| lignes | 1,86 | 3,71 | 5.68 | 5,68 | 0,94 | 1,87 | 2,86 | 2,86 |
| | | | | | | | | |
| colonnes N/B | 1,64 | 1,64 | 1,07 | 2,14 | 0,90 | 0,90 | 0,59 | 1,18 |
| lignes N/B | 1,86 | 3,71 | 5,68 | 5,68 | 0,94 | 1,87 | 2,86 | 2,86 |

On remarque que pour un capteur VGA, en résolution standard, sans tourner l'image, on dispose d'une correspondance la plus favorable. Celle-ci est bien entendue obtenue avec une orientation de type paysage du capteur de la caméra du téléphone mobile. Si, pour un usage préférentiellement destiné à la visiophonie, le capteur était en orientation portrait, il conviendrait de tourner l'image de 90° pour atteindre la correspondance la plus favorable. L'algorithme de rotation est contenu dans la mémoire programme 22.

L'image du fichier 26 (ou 31) et donc au format accepté par un protocole de télécopie. Le téléphone mobile comporte alors, dans le programme 25 des instructions pour transcoder le signal codé selon un protocole de télécopie en un signal codé selon un protocole de téléphonie mobile. De ce point de vue, cette partie du programme 25 est connue, elle est la même que celle employée pour envoyer une télécopie avec un téléphone mobile lorsque le téléphone mobile est relié à un télécopieur classique par une prise d'embase.

Avec le téléphone mobile ainsi décrit, l'utilisateur peut décider de faire de la reconnaissance d'éléments biométriques. Il choisit à cet effet dans le menu 21 le mode correspondant. Un programme 34 de la mémoire programme 22 gère le mode de reconnaissance d'éléments biométriques.

Dans ce cas, un élément biométrique, qui doit être reconnu, est placé en regard de l'objectif de la caméra 2. Un dispositif de production de lumière peut alors être de préférence déclenché pour obtenir une image interprétable de l'élément biométrique à reconnaître. Il peut par exemple s'agir de l'iris de l'oeil du possesseur autorisé du téléphone mobile. Le dispositif de lumière peut ainsi être une diode lumineuse dont le fonctionnement dépend d'une cellule photoélectrique. Une double focale d'un système optique aménagé dans l'objectif peut servir à réaliser une mise au point.

La reconnaissance d'éléments biométriques peut être de deux catégories. Une première catégorie est la reconnaissance d'empreintes digitales. Dans ce cas l'utilisateur place une extrémité d'un doigt en regard de l'objectif, par exemple à deux ou trois centimètres de celui-ci. L'image en couleur de ce doigt peut être affichée sur l'écran 7. Lorsque l'utilisateur approuve l'image visualisée par une action sur le clavier 20, cette image visualisée est mémorisée dans le fichier 26. Eventuellement cette image est traitée selon un algorithme de reconnaissance biométrique. Les données résultant de cette reconnaissance sont ensuite comparées avec des données correspondantes préalablement mémorisées. Ces données correspondantes peuvent être mémorisées en interne ou en externe au téléphone mobile.

Si une base de données contenant ces données correspondantes est externe, contenue en particulier dans un serveur de données de l'opérateur de téléphonie mobile, on réalise une communication préalable avec cette base de données. Des signaux de signalisation sont émis en conséquence par le téléphone mobile. Ces signaux de signalisation encapsulent l'image traitée pour la rendre conforme à un protocole de téléphonie mobile. Le serveur de données, ou le téléphone mobile lui-même selon le cas, comparent l'empreinte digitale de l'utilisateur avec une empreinte digitale préalablement mémorisée. Le téléphone mobile est ensuite autorisé ou non à fonctionner complètement ou en partie selon la reconnaissance effectuée. De cette manière, avec un téléphone mobile, on remplace l'utilisation d'une carte à puce dont la falsification est envisageable (quoique très difficile).

Une deuxième catégorie est la reconnaissance d'éléments biométriques faciaux. L'utilisateur place par exemple son iris devant l'objectif de la caméra 2. Le déroulement des opérations de reconnaissance est analogue à celui des opérations de reconnaissance des empreintes digitales.

Une application possible de reconnaissance d'éléments biométriques est un paiement du type paiement par carte bancaire, par l'intermédiaire du téléphone, mais de préférence sans la présence d'une carte bancaire. Après avoir effectué la mémorisation d'un élément biométrique de sa personne, l'utilisateur choisit dans le menu utilisateur contenu dans le programme 21 un programme 38 de paiement. Un premier sous-programme 39 du programme 38 permet de mémoriser un numéro de compte en banque ou de carte bancaire et un code confidentiel. Ce numéro et le code confidentiel sont composés par l'utilisateur grâce au clavier de commande 20. La vérification du fait que le compte ou la carte bancaire appartient bien à l'utilisateur s'effectue dans des circuits de la banque avec lesquels le téléphone 1 entre en relation. La base de données contenue dans le téléphone mobile utilisée ici comporte par exemple des numéros de comptes bancaires. Un élément biométrique est associé pour chaque numéro de compte bancaire. Les paiements par compte bancaire par l'intermédiaire d'un téléphone mobile sont ainsi sécurisés. Au préalable, bien entendu, la base de données de la banque aura été renseignée avec des informations biométriques à mettre en correspondance d'une identité d'un utilisateur. Le message de paiement édité comporte des informations (classique) d'identité du créancier, de montant, et à titre d'information d'identité du débiteur, les données biométriques transmises. La signature du message de paiement est donc automatique, ne nécessite pas de code secret ni d'algorithme secret particulièrement protégé.

Il est aussi envisageable d'utiliser la reconnaissance d'éléments biométriques pour sécuriser l'utilisation du téléphone mobile lui-même. Ainsi, une base de données interne n'aurait, par exemple, en mémoire que les éléments biométriques des personnes autorisées à utiliser le téléphone mobile. De préférence, le fonctionnement du téléphone mobile peut être personnalisé (annuaire notamment) en correspondance des données biométriques reconnues.

Dans les deux cas d'utilisation ainsi évoqués, la caméra permet de prélever des images et de traiter ces images selon un protocole particulier, différent d'un simple traitement d'image, et correspondant à une utilisation nouvelle, ici télécopie ou reconnaissance biométrique.

Il peut par ailleurs être utile d'utiliser un téléphone mobile pour y traiter ou faire transmettre des informations contenues dans un micro-ordinateur, ou plus généralement dans un appareil électronique quelconque, notamment portable, notamment du type organiseur. Dans ce but, on connaît des connexions par câble avec lesquelles le téléphone mobile est relié à l'appareil pour assurer ce traitement et ou cette transmission. Ces solutions présentent l'inconvénient de nécessiter une interface matérielle normalisée. Dans l'invention, on préfère utiliser une communication lumineuse entre l'appareil et le téléphone mobile, par exemple mais pas seulement de type infrarouge. Dans ce but, l'appareil est muni d'une simple diode électroluminescente en relation avec un circuit de pilotage qui lui fait émettre une séquence de signaux lumineux. Le téléphone capte cette séquence et la traite : s'en sert pour lui-même ou l'envoie à un destinataire par la liaison de téléphonie mobile. Pour éviter toutefois d'avoir à installer un détecteur de lumière (supplémentaire) dans le téléphone mobile, alors que ce dernier est déjà muni d'une caméra, on utilise à cet effet la caméra. En effet, la caméra capte la séquence des signaux lumineux. Dans l'autre sens, on ajoute au téléphone mobile une diode électroluminescente (ou un transistor électroluminescent ou autre) et des circuits de pilotage pour la commander.

Toutefois, le rythme des images d'une telle caméra n'est pas adapté à un débit élevé de transmission de signaux numériques. En effet, avec un taux de rafraîchissement de dix images par seconde, on aboutit à un débit de l'ordre de un octet par seconde, dans certains cas c'est trop peu. Pour résoudre ce problème, dans l'invention on a remarqué que la caméra était dotée d'un capteur avec beaucoup de détecteurs, correspondant à au moins 352 X 288 pixels, soit au moins 101 376 pixels selon les exemples cités plus haut. Comme chacun de ces 100 000 pixels est ainsi sollicité 10 fois par seconde, on peut obtenir un capteur cadencé à 1 MHz. Dans ce but, dans l'invention, on applique le signal de sortie de la caméra directement à l'entrée de signal d'un détecteur d'entrée. Un tel détecteur d'entrée est du même type ou est celui qui est en service à l'entrée câble du téléphone mobile. Dans ce cas, le signal de cadencement de ce détecteur d'entrée est appliqué comme signal de synchronisation à la caméra. La fréquence du signal de cadencement de ce détecteur d'entrée est fixée par avance, en fonction d'un protocole convenu de transmission des signaux lumineux. Le détecteur d'entrée reçoit en correspondance les signaux transmis par la caméra sur l'unique sortie de celle-ci, alors qu'à chaque lecture un autre pixel de la caméra délivre son signal. Avec un échantillonnage à 1 MHz, et en retenant dix échantillons temporels pour caractériser un bit, on peut facilement obtenir un débit de 115 Kbits. Dans une telle utilisation, la caméra est de préférence défocalisée pour que tous ses pixels soient illuminés par le signal lumineux, émis ponctuellement par la diode de l'appareil.

Dans l'invention, de préférence, pour réaliser une mise au point de l'image à capturer par la caméra, un dispositif électroluminescent, dit diode d'émission, notamment de type LED infrarouge est utilisé. Cette diode d'émission (non représentée) est placée, par exemple, à côté de l'objectif de la caméra, notamment sur le même volet 4 que celle-ci. La diode d'émission éclaire un objet dont on veut acquérir une image, par exemple le pouce de l'utilisateur dont on veut capter l'empreinte digitale. Le signal lumineux d'éclairement a besoin d'un temps non nul pour arriver jusqu'à l'objet et revenir sur l'objectif de la caméra, c'est à dire être repéré par le capteur de la caméra. Avec le programme 28, connaissant la date d'émission du signal lumineux et la date de sa réception, on peut connaître au cours d'une étape préalable à la capture d'image le temps mis pour effectuer un aller retour. A partir de ce temps, la distance à laquelle se trouve l'objet est calculée. La mise au point de la caméra résulte ensuite automatiquement d'un paramètre ainsi mesuré correspondant à cette distance. Pour déduire cette distance, la diode est synchrone ou de préférence en déphasage continu avec l'horloge d'échantillonnage pixel du capteur d'image.

En effet, pour une distance de l'ordre de 50 cm, soit un mètre aller retour, le temps d'aller retour est de l'ordre de 3 ns. Comme le capteur de la caméra peut avoir un temps de réaction qui n'est pas suffisamment rapide, le signal de synchronisation du capteur de la caméra est un signal maître et la diode d'émission déphase à chaque fois son émission, progressivement, sur plusieurs essais par rapport à ce signal maître. Ainsi de la lecture d'un pixel à celle d'un autre, à chaque microseconde, le déclenchement de la diode d'émission est anticipé avec une anticipation progressive, progressant lentement. Plus la progression est lente, plus la finesse de la mesure de la distance focale sera grande. Par exemple, une anticipation maximale est de 30 ns (correspondant à 15 mètres, équivalent à l'infini). Elle est par exemple obtenue au bout d'une durée de capture d'une image entière, de l'ordre de 0,1 seconde. De cette manière, on peut repérer l'essai pour lequel un des pixels détecte, échantillonne, le signal lumineux. D'un essai à l'autre, le rang du pixel susceptible de réaliser la détection évolue. On déduit de ce rang, ou du numéro de l'essai, le temps mis par le signal d'éclairement pour réaliser un aller retour.

Dans ce but, le téléphone 1 comporte un circuit (le microprocesseur 9 et un sous programme non représenté de la mémoire 22) pour faire émettre avec une anticipation progressive un signal lumineux par le dispositif électroluminescent par rapport à un signal de synchronisation de la caméra. La caméra délivre donc son signal de synchronisation au microprocesseur 9 (à moins que ce signal ne soit produit par ce microprocesseur 9). Le téléphone comporte également un circuit, typiquement le microprocesseur 9 et un sous programme adapté, pour repérer un rang d'un premier détecteur de la caméra qui reçoit le signal lumineux émis. Ainsi, si le détecteur de rang P sur Q détecteurs au total est le premier qui reçoit le signal lumineux, alors que les P-i précédents détecteurs ne l'avait pas détecté, la durée d'anticipation nécessaire sera mesurée comme égale à L x P/Q, où L représente l'anticipation maximale (les 30 ns).

Il est donc possible d'obtenir des notions de distance, de régler des focales et de réaliser des détections de tête pour l'écoute main libre. Il est aussi envisageable d'utiliser la diode démission pour réaliser de la vision de nuit : la caméra capte l'image de l'objet éclairé par la diode d'émission.

## Revendications

1. Téléphone mobile (1) comportant une caméra de visiophone (2) munie de moyens pour réaliser une mise au point de la caméra à partir de la distance à laquelle se trouve un objet observé par la caméra, **caractérisé en ce qu'**il comporte des circuits (21, 22, 23, 24, 34) pour saisir des images biométriques avec la caméra, des circuits (20, 23, 26, 34) pour traiter les images saisies et des circuits (20, 21, 22) pour *autoriser* un *mode de* fonctionnement du téléphone mobile *selon* l'image saisie.

2. Téléphone selon la revendication 1, **caractérisé en ce que** les images biométriques sont des images d'empreintes digitales et/ou des images biométriques faciales, notamment un iris.

3. Téléphone selon l'une des revendications 1 à 2, **caractérisé en ce qu'**il comporte des circuits pour montrer sur un écran (7) une image d'une empreinte digitale *et*/*ou une image biométrique faciale* au moment du traitement.

4. Téléphone selon l'une des revendications 1 à 3, **caractérisé en ce que** les circuits de saisie comportent une caméra (2) à plusieurs focales.

5. Téléphone selon l'une des revendications 1 à 4 **caractérisé en ce que** les circuits de saisie comportent un dispositif produisant un éclairement.

6. Téléphone selon la revendication 5, **caractérisé en ce qu'**il comporte des circuits pour déclencher le fonctionnement du dispositif produisant un éclairement.

7. Téléphone selon l'une des revendications 1 à 6, **caractérisé en ce qu'**il comporte des circuits (39) pour mémoriser des numéros de cartes de paiement.

8. Téléphone selon l'une des revendications 1 à 7, **caractérisé en ce qu'**il comporte des circuits pour effectuer des paiements.

9. Téléphone selon l'une des revendications 1 à 8, **caractérisé en ce qu'**il comporte des circuits pour transmettre des données correspondant aux images saisies.

10. Téléphone selon l'une des revendications 1 à 9, **caractérisé en ce qu'**il comporte des circuits pour sécuriser son utilisation.

11. Téléphone selon l'une des revendications 1 à 10, **caractérisé en ce qu'**il comporte un dispositif électroluminescent placé à côté de la caméra.

12. Téléphone selon la revendication 11, **caractérisé en ce qu'**il comporte une mémoire programme qui mémorise un sous-programme (28) pour déterminer un paramètre correspondant à un temps nécessaire pour qu'un signal d'éclairement du dispositif électroluminescent aille jusqu'à un objet et revienne à son point de départ.

13. Téléphone selon l'une des revendications 11 à 12, **caractérisé en ce qu'**il comporte un circuit (2, 9, 22) pour émettre avec une anticipation progressive un signal lumineux du dispositif électroluminescent par rapport à un signal de synchronisation de la caméra.

14. Téléphone selon la revendication 13, **caractérisé en ce que** le circuit pour émettre comporte un circuit pour repérer un rang (P) d'un détecteur (A-Q) qui, le premier, reçoit le signal lumineux émis.

15. Téléphone selon l'une des revendications 1 à 14, **caractérisé en ce que** qu'il comporte un détecteur d'entrée et une entrée de synchronisation de la caméra, l'entrée de synchronisation de la caméra étant alimentée par un signal de cadencement émanant du détecteur d'entrée.

16. Téléphone mobile selon l'une des revendications 1 à 15, **caractérisé en ce que** la caméra est dirigée depuis un coté d'un boîtier (5) du téléphone où il n'y a pas d'écran.

17. Téléphone selon l'une des revendications 1 à 16, **caractérisé en ce qu'**il comporte des circuits (8, 9, 13) pour *déduire une orientation de* la caméra.

18. Téléphone selon l'une des revendications 1 à 17, **caractérisé en ce que** la caméra est montée sur un volet (400, 401) orientable.

19. Téléphone selon l'une des revendications 1 à 18, **caractérisé en ce qu'**il comporte des circuits (8, 9, 13) pour qu'une utilisation de la caméra soit fonction de l'orientation.

20. Téléphone selon l'une des revendications 1 à 19, **caractérisé en ce qu'**il comporte des circuits pour corriger un effet de perpective, et/ou de grossissement d'une image saisie avec la caméra.

## Patentansprüche

1. Mobiltelefon (1) mit einer Bildtelefonkamera (2), versehen mit Mitteln um die Kamera ferngesteuert aus der Entfernung einzustellen, in der sich ein von der Kamera erfasstes Objekt befindet, **dadurch gekennzeichnet, dass** das Mobiltelefon Schaltkreise (21, 22, 23, 24, 34) zur Erfassung von biometrischen Bildern mit der Kamera, Schaltkreise (20, 23, 26, 34) zur Verarbeitung der erfassten Bilder und Schaltkreise (20, 21, 22) zur Freigabe einer Funktionsweise des Mobiltelefons in Abhängigkeit des erfassten Bildes aufweist.

2. Telefon nach Anspruch 1, **dadurch gekennzeichnet, dass** die biometrischen Bilder solche von Fingerabdrücken und/oder biometrische Aufnahmen des Gesichts sind, insbesondere einer Iris.

3. Telefon nach Anspruch 1 oder 2, **dadurch gekennzeichnet, dass** das Telefon Schaltkreise zur Darstellung eines Bildes von einem Fingerabdruck und/oder einer biometrischen Aufnahme des Gesichts auf einem Bildschirm (7) zum Zeitpunkt der Verarbeitung aufweist.

4. Telefon nach einem der Ansprüche 1 bis 3, **dadurch gekennzeichnet, dass** die Erfassungsschaltkreise eine Kamera (2) mit mehreren Brennweiten aufweisen.

5. Telefon nach einem der Ansprüche 1 bis 4, **dadurch gekennzeichnet, dass** die Erfassungsschaltkreise eine Beleuchtungseinrichtung aufweisen.

6. Telefon nach Anspruch 5, **dadurch gekennzeichnet, dass** das Telefon Schaltkreise zur Auslösung der Beleuchtungseinrichtung aufweist.

7. Telefon nach einem der Ansprüche 1 bis 6, **dadurch gekennzeichnet, dass** das Telefon Schaltkreise (39) zur Speicherung von Nummern von Kreditkarten aufweist.

8. Telefon nach einem der Ansprüche 1 bis 7, **dadurch gekennzeichnet, dass** das Telefon Schaltkreise zur Durchführung von Zahlungen aufweist.

9. Telefon nach einem der Ansprüche 1 bis 8, **dadurch gekennzeichnet, dass** das Telefon Schaltkreise zur Übertragung von Daten der erfassten Bilder aufweist.

10. Telefon nach einem der Ansprüche 1 bis 9, **dadurch gekennzeichnet, dass** das Telefon Schaltkreise zur Sicherung seiner Benutzung umfasst.

11. Telefon nach einem der Ansprüche 1 bis 10, **dadurch gekennzeichnet, dass** das Telefon eine Elektrolumineszenzvorrichtung aufweist, die direkt neben der Kamera angeordnet ist.

12. Telefon nach Anspruch 11, **dadurch gekennzeichnet, dass** das Telefon einen Programmspeicher aufweist, in dem ein Unterprogramm (28) gespeichert ist zur Bestimmung eines Parameters, das einer Zeitdauer entspricht, die ein Beleuchtungssignal der Elektrolumineszenzvorrichtung benötigt, um zu einem Objekt und wieder zurück an seinen Ausgangspunkt zu gelangen.

13. Telefon nach Anspruch 11 oder 12, **dadurch gekennzeichnet, dass** das Telefon einen Schaltkreis (2, 9, 22) zur Aussendung eines Lichtsignals mit der Elektrolumineszenzvorrichtung mit einer progressiven Vorauseilung in bezug auf ein Synchronisationssignal der Kamera aufweist.

14. Telefon nach Anspruch 13, **dadurch gekennzeichnet, dass** der Aussendungsschaltkreis einen Schaltkreis zum Auffinden eines Ranges (P) eines Detektors (A-Q) aufweist, wobei der Aussendungsschaltkreis das ausgesendete Lichtsignal empfängt.

15. Telefon nach einem der Ansprüche 1 bis 14, **dadurch gekennzeichnet, dass** das Telefon einen Eingangsdetektor und einen Synchronisationseingang der Kamera aufweist, wobei der Synchronisationseingang mit einem Taktsignal beaufschlagt wird, das vom Eingangsdetektor ausgesendet wird.

16. Telefon nach einem der Ansprüche 1 bis 15, **dadurch gekennzeichnet, dass** die Kamera von einer Seite des Telefongehäuses (5) aus bedient wird, auf der sich kein Bildschirm befindet.

17. Telefon nach einem der Ansprüche 1 bis 16, **dadurch gekennzeichnet, dass** das Telefon Schaltkreise (8, 9, 13) umfasst um eine Ausrichtung der Kamera abzuleiten.

18. Telefon nach einem der Ansprüche 1 bis 17, **dadurch gekennzeichnet, dass** die Kamera auf einer ausrichtbaren Klappe (400, 401) angebracht ist.

19. Telefon nach einem der Ansprüche 1 bis 18, **dadurch gekennzeichnet, dass** das Telefon Schaltkreise (8, 9, 13) umfasst, damit die Benutzung der Kamera in Abhängigkeit von der Ausrichtung erfolgt.

20. Telefon nach einem der Ansprüche 1 bis 19, **dadurch gekennzeichnet, dass** das Telefon Schaltkreise zur Korrektur von Perspektiveeffekten und/oder der Vergrößerung eines mit der Kamera erfassten Bildes ausweist.

## Claims

1. Mobile telephone (1) comprising a videophony camera (2) equipped with means for focusing the camera from the distance at which an object observed by the camera is located, ***characterised in that*** it comprises circuits (21, 22, 23, 24, 34) for capturing biometric images with the camera, circuits (20, 23, 26, 34) for processing the captured images, and circuits (20, 21, 22) for allowing a mode of operation of the mobile telephone according to the captured image.

2. Telephone according to claim 1, ***characterised in that*** the biometric images are images of fingerprints and/or facial biometric images, in particular of an iris.

3. Telephone according to one of claims 1 to 2, ***characterised in that*** it comprises circuits for showing an image of a fingerprint and/or a facial biometric image on a screen (7) at the moment of processing.

4. Telephone according to one of claims 1 to 3, ***characterised in that*** the capturing circuits comprise a camera (2) with a plurality of foci.

5. Telephone according to one of claims 1 to 4, ***characterised in that*** the capturing circuits comprise a device producing illumination.

6. Telephone according to claim 5, ***characterised in that*** it comprises circuits for triggering the operation of the device producing illumination.

7. Telephone according to one of claims 1 to 6, ***characterised in that*** it comprises circuits (39) for storing numbers of payment cards.

8. Telephone according to one of claims 1 to 7, ***characterised in that*** it comprises circuits for effecting payments.

9. Telephone according to one of claims 1 to 8, ***characterised in that*** it comprises circuits for transmitting data corresponding to the captured images.

10. Telephone according to one of claims 1 to 9, ***characterised in that*** it comprises circuits for securitising its use.

11. Telephone according to one of claims 1 to 10, ***characterised in that*** it comprises an electrical light-emitting device placed beside the camera.

12. Telephone according to claim 11, ***characterised in that*** it comprises a programme memory which stores a sub-programme (28) for determining a parameter corresponding to a time necessary for a signal for illumination of the electrical light-emitting device to pass to an object and return to its point of departure.

13. Telephone according to one of claims 11 to 12, ***characterised in that*** it comprises a circuit (2, 9, 22) for emitting a light signal of the electrical light-emitting device with a progressive advance in relation to a camera synchronisation signal.

14. Telephone according to claim 13, ***characterised in that*** the emitting circuit comprises a circuit for marking a position (P) of a detector (A-Q) which first receives the emitted light signal.

15. Telephone according to one of claims 1 to 14, ***characterised in that*** it comprises an input detector and a camera synchronisation input, the camera synchronisation input being supplied by a timing signal emanating from the input detector.

16. Mobile telephone according to one of claims 1 to 15, ***characterised in that*** the camera is directed from a side of a casing (5) of the telephone on which there is no screen.

17. Telephone according to one of claims 1 to 16, ***characterised in that*** it comprises circuits (8, 9, 13) for deducing the orientation of the camera.

18. Telephone according to one of claims 1 to 17, ***characterised in that*** the camera is mounted on an orientable flap (400, 401).

19. Telephone according to one of claims 1 to 18, ***characterised in that*** it comprises circuits (8, 9, 13) such that use of the camera is dependent on the orientation.

20. Telephone according to one of claims 1 to 19, ***characterised in that*** it comprises circuits for correcting an effect of perspective and/or of enlargement of an image captured with the camera.
